# EUROPÄISCHE PATENTANMELDUNG

(11) **EP 1 464 616 A2**
(43) Veröffentlichungstag der Anmeldung: **06.10.2004**
(21) Anmeldenummer: 04013377.9
(22) Anmeldetag: 06.09.2000
(51) Int. Cl.: C01B 3/38, C01B 3/32, B01J 8/02, B01J 12/00

(54) **Reaktorsystem mit elektrischen Heizmitteln**

(30) Priorität: 17.09.1999 DE 19944540
(62) Teilanmeldung aus: 00119232.7
(71) Anmelder: DaimlerChrysler AG, 70567 Stuttgart (DE)
(72) Erfinder: Autenrieth, Rainer, 71723 Grossbottwar (DE); Docter, Andreas Dr., 89073 Ulm (DE); Wiesheu, Norbert, 89312 Günzburg (DE)

(57) **Zusammenfassung**

Ein Reaktorsystem dient zur Umsetzung eines Kohlenwasserstoff- oder Kohlenwasserstoffderivat-Einsatzstoffs. Es umfasst einem katalysatorbelegten Reaktionsraum, dem wenigstens ein Reaktionseduktstrom über einen Reaktionsraumeintritt zuführbar ist, und elektrische Heizmitteln, die eine vor dem Reaktionsraumeintritt befindliche elektrische Heizvorrichtung zum Aufheizen wenigstens eines Reaktionseduktes in einer Startbetriebsphase beinhalten.

Dabei weisen die elektrischen Heizmittel Mittel zum punktuellen Einbringen des wenigstens einen in der Heizvorrichtung (41) aufgeheizten Reaktionseduktes in den Reaktionsraum (45) an einer oder mehreren Stellen des Eintrittsquerschnitts (47) für Reaktionsedukte auf.

## Beschreibung

Die Erfindung betrifft ein Reaktorsystem zur Umsetzung eines Kohlenwasserstoff- oder Kohlenwasserstoffderivat-Einsatzstoffs nach dem Oberbegriff des Anspruchs 1.

In der EP 0 757 968 A1 ist ein Reformierungsreaktor beschrieben, der zur katalytischen Verbrennung von Methanol und Sauerstoff bzw. sauerstoffhaltigem Gas in einem Reaktionsraum dient.

Für die katalytische Verbrennung werden die Reaktionsedukte über einen in das Innere des katalysatorbefüllten Reaktionsraums ragenden Versorgungskanal einem inneren Bereich des Reaktionsraums zugeführt. Im Bereich der Öffnung des Versorgungskanals im Inneren des Reaktionsraums befindet sich eine elektrische Heizwendel, mit der in einer Aufwärmbetriebsphase Katalysatormaterial, das sich an der Öffnung befindet, schnell auf eine für die katalytische Reaktion geeignete Temperatur gebracht werden kann. Reaktionsedukte, die durch die Öffnung des Versorgungskanals in den Reaktionsraum gelangen, werden durch die im Bereich der Heizwendel ablaufende exotherme Reaktion erwärmt und führen so zu einem Erhitzen der übrigen Bereiche des Reaktionsraumes. Ist nach einer Anlaufbetriebsphase im gesamten Reaktionsraum eine gewünschte Betriebstemperatur erreicht, kann die Heizwendel abgeschaltet werden.

In der DE 33 45 958 A1 ist ein wasserstofferzeugender Reformierungsreaktor zur Reformierung von Methanol beschrieben, der einen Brenner umfasst, in dem zugeführtes Methanol mit Luft in einer Startbetriebsphase verbrannt wird, um so den Reformierungsreaktor schnell auf eine günstige Betriebstemperatur aufzuheizen.

'Die US 3 982 910 offenbart einen wasserstofferzeugenden, katalytischen Reaktor zur Umsetzung eines Kohlenwasserstoffs unter Beimischung von Luft. In einer Aufwärmbetriebsphase wird in den Reaktor über eine Brenndüse flüssiger Kohlenwasserstoff sowie Luft zugeführt und durch eine Zündkerze gezündet. Aufgrund der exothermen Verbrennungsreaktion erreicht der Reformierungsreaktor dann schnell seine Betriebstemperatur, wonach er zur partiellen Oxidation von verdampftem Kohlenwasserstoff dient.

Aus der JP 3-218902 (A) ist ein wasserstofferzeugender, katalytischer Reformierungsreaktor zur Reformierung von dampfförmigem Methanol bekannt. Der Reformierungsreaktor enthält einen katalytischen Brenner, in dem während einer Aufwärm-Betriebsphase ein Methanoldampf-Luft-Gemisch verbrannt wird, um schnell eine günstige Arbeitstemperatur für das in den Reformierungsreaktor geleitete, zu reformierende Gasgemisch zu erreichen.

Weiter ist in der JP 7-315802 (A) ein wasserstofferzeugender, katalytischer Reformierungsreaktor beschrieben, dem eine elektrisch betriebene Heizeinrichtung zugeordnet ist. Letztere umfasst Heizwiderstände, die in das Katalysatormaterial im Reformierungsreaktor eingebettet sind und mittels einer Batterie gespeist werden. Durch Betreiben der Heizeinrichtung in einer Startbetriebsphase soll der Reformierungsreaktor mit seinem gesamten Reaktorvolumen schnell auf eine für die Reformierungsreaktion günstige Temperatur gebracht werden. In ähnlicher Weise offenbart die JP 58-219945 (A) einen zylindrischen Reformierungskatalysatorkörper mit gitterförmiger Querschnittsstruktur, deren Öffnungen von elektrischen Heizdrähten durchzogen sind, um den reaktionsraumbildenden Katalysatorkörper schnell auf Betriebstemperatur zu bringen.

In der Offenlegungsschrift EP 0 913 357 A1 ist ein gattungsgemäßes Reaktorsystem offenbart, bei dem die elektrische Heizvorrichtung von einem katalysatorbelegten und für den Reaktionseduktstrom durchlässigen Heizkörper mit z.B. poröser oder wabenförmiger Struktur gebildet ist, der mit Abstand vor dem Reaktionsraumeintritt eines katalysatorbelegten Reaktionsraums angeordnet ist, der von einem Katalysatorkörper gebildet ist, welcher mit dem Heizkörper in einem gemeinsamen Gehäuse untergebracht ist. Alternativ kann der Heizkörper entfallen und der Katalysatorkörper selbst elektrisch beheizbar ausgelegt sein. Ähnliche Reaktorsysteme mit einem reaktionsraumbildenden Katalysatorkörper und einem diesem mit Abstand vorgeschalteten elektrischen Heizkörper sind in der nachveröffentlichten Offenlegungsschrift EP 0 967 174 A 1 und der Offenlegungsschrift GB 2 268 694 A beschrieben.

Aufgabe der Erfindung ist, ein Reaktorsystem der eingangs genannten Art zu schaffen, das ein gutes Kaltstartverhalten hat.

Diese Aufgabe wird durch ein Reaktorsystem gemäß Anspruch 1 gelöst.

Beim erfindungsgemäßen Reaktorsystem nach Anspruch 1 sind vor dem Reaktionsraumeintritt eine elektrische Heizvorrichtung zum Aufheizen wenigstens eines Reaktionseduktes in einer Startbetriebsphase und Mittel zum punktuellen Einbringen des wenigstens einen in der Heizvorrichtung aufgeheizten Reaktionseduktes in den Reaktionsraum vorgesehen. Erfindungsgemäß wird somit in einer Startbetriebsphase ein besonders effizientes, schnelles Erwärmen des Reaktorsystems auf Betriebstemperatur ermöglicht.

,In Weiterbildung des Reaktorsystems nach Anspruch 2 umfasst dieses ein schaltbares Reaktionsedukt-Zufuhrsystem mit Zufuhrmitteln, die den Reaktionseduktstrom in einem Startbetriebsmodus dem Reaktionsraum nur über einen Teil des Eintrittsquerschnittes desselben und in einem Normalbetriebsmodus über den gesamten Eintrittsquerschnitt zuführen. Auf diese Weise kann die Zufuhr von Reaktionsedukten dem unterschiedlichen Bedarf im Startbetriebsmodus einerseits und im Normalbetriebsmodus andererseits angepasst werden.

Weitere Merkmale und Vorteile der Erfindung sind in den Zeichnungen dargestellt und werden nachfolgend beschrieben.

Dabei zeigt
die einzige beigefügte Figur eine schematische Seitenansichten eines möglichen Aufbaus des erfindungsgemäßen Reaktorsystems zur Umsetzung eines Kohlenwasserstoff- oder Kohlenwasserstoffderivat-Einsatzstoffes in einer Startbetriebsphase.

In der einzigen beigefügten Figur ist ein Reaktorsystem 40 zur beispielsweise autothermen Reformierung eines Kohlenwasserstoffs bzw. Kohlenwasserstoffderivats, wie Methanol, in einer Startbetriebsphase dargestellt, das einen Reaktionsraum 46 aufweist. Dieser enthält ein nicht weiter dargestelltes, geeignetes Katalysatormaterial. Wird das Katalysatormaterial bei geeigneter Temperatur einer Mischung von Luft, Wasser und Kohlenwasserstoff bzw. Kohlenwasserstoffderivat als Reaktionsedukten ausgesetzt, so bildet sich im Rahmen einer katalytischen Reaktion ein H₂-reiches Gas, das, gegebenenfalls nach weiterer Aufbereitung, zum Betrieb einer Brennstoffzelle etwa für ein Brennstoffzellenfahrzeug herangezogen werden kann. Für einen effektiven Ablauf der katalytischen Reaktion am Katalysatormaterial ist eine gewisse, über Raumtemperatur liegende Mindesttemperatur erforderlich.

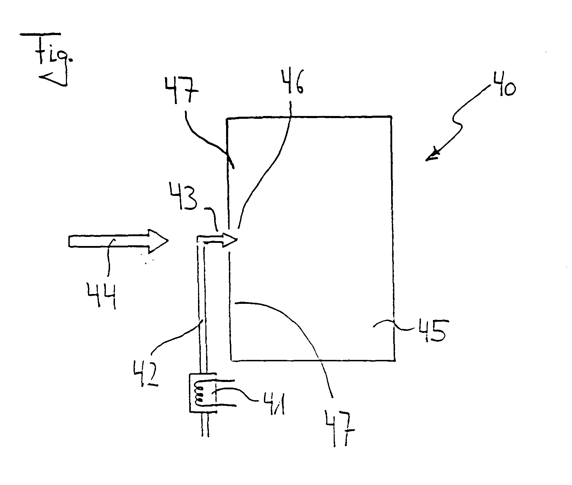

Um beim Kaltstart den kalten, sich auf Umgebungstemperatur befindlichen Reaktionsraum 45 schnell auf die Betriebstemperatur zu bringen, ist in der Figur ein Reaktorsystem 40 dargestellt, bei dem in einer Startbetriebsphase eines der Reaktionsedukte, nämlich Luft, mittels einer elektrischen Heizvorrichtung 41, welche über elektrische Leitungen an eine nicht weiter dargestellte elektrische Energiequelle, beispielsweise eine Kraftfahrzeug-Batterie, angeschlossen sein kann, beim Durchströmen einer Zufuhrleitung 42 aufgeheizt wird, um in einem Eintrittsbereich 43 von Reaktionsedukten in einen Reaktionsraum 45 mit dem Kohlenwasserstoff- bzw. Kohlenwasserstoffderivat-Einsatzstoff 44 vermengt zu werden. Das sich auf diese Weise ergebende Reaktionseduktgemisch gelangt damit punktuell, wie gezeigt an einer Stelle oder in nicht gezeigter Weise alternativ an mehreren Stellen, an einem Reaktionsraumeintritt 46 in den Reaktionsraum 45. Es hat aufgrund seines Anteils an erhitzter Luft eine Temperatur, die zunächst das rasche Starten einer katalytischen Verbrennungsreaktion am Katalysatormaterial im Bereich des oder der Lufteindüsstellen am Reaktionsraumeintritt 46 bewirkt. Somit bildet sich, ausgehend vom Reaktionsraumeintritt 46 mit der punktuellen Luftstrom-Wärmequelle ein Temperaturprofil aus, dem die Heizvorrichtung 41 als Wärmequelle zugrunde liegt, und welches sich durch die punktuell eintrittsseitig erzeugte 'Wärme schnell über den gesamten Reaktionsraum 45 ausbreitet. Ausgehend vom Bereich des Reaktionsraumeintritts 46 wird dabei das sich im Reaktionsraum 45 befindliche Katalysatormaterial schnell aufgeheizt, so dass sich die katalytische Reaktion, die durch die Heizvorrichtung 41 gestartet wurde, schnell fortsetzt. Dabei wird Warme sowohl durch Festkörper-Wärmeleitung über das Katalysatormaterial und gegebenenfalls über Trägerstrukturen im Reaktionsraum 45 als auch durch den Massefluss von Reaktionsedukten bzw. Produktgasen im Reaktionsraum 45 transportiert. Die bei der katalytischen Reaktion freigesetzte Energie führt demnach zu einem raschen Aufheizen des gesamten Reaktionsraumes.

Um die Zufuhr von Reaktionseduktgemisch an die im Reaktionsraum 45 umsetzbare Menge anzupassen, werden, wenn der Reaktionsraum 45 eine optimale Betriebstemperatur erreicht hat, also in der Normalbetriebsphase die Reaktionsedukte sämtliche Reaktionsedukte 43, 44 über den gesamten Eintrittsquerschnitt 47 dem Reaktionsraum 45 zugeführt, wobei die elektrische Heizungsvorrichtung 41 ausgeschaltet ist. Dann wird durch den exothermen bzw. autothermen katalytischen Reaktionsablauf im Reaktionsraum 45 genügend Energie freigesetzt, so das ein Vorheizen von Reaktionsedukten mittels der Heizvorrichtung 41 nicht mehr erforderlich ist.

Um dem Reaktionsraum 45 in einer Startbetriebsphase eine stöchiometrische Mischung von Reaktionsedukten, insbesondere von Luft und Kohlenwasserstoff bzw. Kohlenwasserstoffderivat, bereitstellen zu können, ist es bei Bedarf möglich, einen mit Batterieenergie betriebenen Luftverdichter einzusetzen. Grundsätzlich sind die beschriebenen Reaktorsysteme auch einer Temperaturregelung Über die jeweiligen Heizvorrichtungen, die sie enthalten, zugänglich. Fallt etwa die Temperatur im Reaktionsraum unter einen vorgegebenen Schwellwert ab, so werden einfach Reaktionsedukte über die betreffenden aktivierten elektrischen Heizvorrichtungen zugeführt. In Analogie zum Betrieb der Reaktorsysteme in einer Startbetriebsphase bewirkt dies einen schnellen Temperaturanstieg.

Ist die gewünschte Temperatur erreicht, werden die Heizvorrichtungen wieder ausgeschaltet. Das Reaktorsystem umfasst möglichst ein schaltbares Reaktionsedukt-Zufuhrsystem, das steuerbare Zufuhrmittel enthält. In einem Startbetriebsmodus des Reaktorsystems wird so ein Reaktionseduktstrom über einen Teil des Eintrittsquerschnittes dem Reaktionsraum zugeführt. Für den Normalbetriebsmodus wird das Reaktionsedukt-Zufuhrsystem umgeschaltet, und der Reaktionseduktstrom wird über einen gesamten Eintrittsquerschnitt in den Reaktionsraum geleitet.

## Patentansprüche

1. Reaktorsystem zum Umsetzung eines Kohlenwasserstoffoder Kohlenwasserstoffderivat-Einsatzstoffs mit
- einem katalysatorbelegten Reaktionsraum, dem wenigstens ein Reaktionseduktstrom über einen Reaktionsraumeintritt zuführbar ist, und
- elektrischen Heizmitteln, die eine vor dem Reaktionsraumeintritt (46) befindliche elektrische Heizvorrichtung (41) zum Aufheizen wenigstens eines Reaktionseduktes in einer Startbetriebsphase beinhalten,
**dadurch gekennzeichnet,**
**dass**
- die elektrischen Heizmittel Mittel zum punktuellen Einbringen des wenigstens einen in der Heizvorrichtung (41) aufgeheizten Reaktionseduktes in den Reaktionsraum (45) an einer oder mehreren Stellen des Eintrittsquerschnitts (47) für Reaktionsedukte aufweisen.

2. Reaktorsystem nach Anspruch 1,
**dadurch gekennzeichnet,**
**dass** das Reaktorsystem (40) ein schaltbares Reaktionsedukt-Zufuhrsystem mit Zufuhrmitteln umfasst, die den Reaktionseduktstrom (44) in einem Startbetriebsmodus nur über einen Teil des Eintrittsquerschnitts (47) in den Reaktionsraum (45) und in einem Normalbetriebsmodus über den gesamten Eintrittsquerschnitt (47) in den Reaktionsraum (45) zuführen.
